Europäisches Patentamt

(19) European Patent Office

Office européen des brevets

(11) Veröffentlichungsnummer: **0 084 104**
**B1**

(12) # EUROPÄISCHE PATENTSCHRIFT

(45) Veröffentlichungstag der Patentschrift:
06.03.85

(51) Int. Cl.⁴: **B 23 K  9/10**

(21) Anmeldenummer: **82111105.1**

(22) Anmeldetag: **01.12.82**

(54) Schutzeinrichtung für den Schweissstromkreis von Schweissstromquellen.

(30) Priorität: **30.12.81  DE 3151864**

(73) Patentinhaber: **MESSER GRIESHEIM GMBH, Hanauer Landstrasse 330, D-6000 Frankfurt/Main 1 (DE)**

(43) Veröffentlichungstag der Anmeldung:
**27.07.83 Patentblatt 83/30**

(72) Erfinder: **Röhm, Ernst, Am Taubenbühl 5a, D-8114 Uffing (DE)**

(45) Bekanntmachung des Hinweises auf die Patenterteilung:
**06.03.85 Patentblatt 85/10**

(84) Benannte Vertragsstaaten:
**AT BE CH FR IT LI NL SE**

(56) Entgegenhaltungen:
**CH - A - 252 580**
**DE - B - 2 544 515**
**DE - C - 1 540 758**

EP 0 084 104 B1

## Beschreibung

Die Erfindung betrifft eine Schutzeinrichtung für den Schweißstromkreis von Schweißstromquellen.

In allen Ländern, in denen Schutzmaßnahmen gegen das Bestehenbleiben zu hoher Berührungsspannungen an berührbaren, elektrisch leitfähigen Teilen elektrischer Geräte, Maschinen und Anlagen im Fehlerfall angewendet werden, geschieht das aufgrund allgemein bekannter Vorschriften. Diese Vorschriften gelten auch für Lichtbogenschweißbetriebsmittel wie Schweißstromquellen, bewegliche Drahtvorschubgeräte usw. sowie für die gesamte Lichtbogenschweißeinrichtung.

In den VDE-Bestimmungen 0541/9.71 »Bestimmungen für Stromquellen zum Lichtbogenschweißen mit Wechselstrom« und 0544 Teil 99/ Juli 1979 »Schweißeinrichtungen und Betriebsmittel für das Lichtbogenschweißen« (harmonisiert aus dem CENILEC-Harmonisierungsdokument HD 362 Juni 77) wird gefordert, daß die Schweißstromquellen der Schutzklasse I oder II entsprechen müssen. Bei Schweißstromquellen mit Metallgehäuse ist Schutzklasse I anzuwenden, d. h. alle berührbaren leitfähigen Teile, die im Falle eines Fehlers der Betriebsisolierung eine für den Menschen gefährliche Spannung gegen Erde annehmen können, sind mit einem Schutzleiteranschluß zu verbinden, durch den sie in eine Schutzmaßnahme gegen zu hohe Berührungsspannung, z. B. nach VDE 0100/5.73, einbezogen werden.

Für die gesamte Schweißeinrichtung, bei deren Betrieb der Anwender im Fehlerfall besonders gefährdet ist, fehlen entsprechende spezielle Bestimmungen, dafür gilt also allein die für alle elektrischen Geräte und Einrichtungen maßgebende allgemeine Vorschrift.

Von den in VDE 0100 genannten Schutzmaßnahmen gegen zu hohe Berührungsspannung können für Schutzklasse I diejenigen angewendet werden, bei denen ein Schutzleiteranschluß vorhanden sein muß.

Es muß nun davon ausgegangen werden, daß die Schweißstromquelle und zugehörige andere Betriebsmittel, z. B. ein Drahtvorschubgerät oder der Schweißbrenner in den allermeisten Fällen keinen festen Standort haben und beweglich ausgeführt, angeordnet und angeschlossen sind und daß das Werkstück, an dem die Schweißung durchgeführt wird, ständig gewechselt wird. Wegen des besonders rauhen Schweißbetriebes, scheiden die Schutzmaßnahmen aus, bei denen der »Körper« — die im Fehlerfall unter Spannung stehenden nichtaktiven berührbaren Teile — unter Einhaltung von Erdungsbedingungen und Anforderungen an den Schutzleiteranschluß (am Werkstück) direkt mit Erde zu verbinden ist, da in der Praxis diese Erdung nicht mit der erforderlichen Zuverlässigkeit durchzuführen ist. Übrig bleibt nur die Schutzmaßnahme »Nullung«, die deshalb fast ausnahmslos seit langem überall angewendet wird. Die Anwendung der Schutzklasse II — Schutzisolierung durch isolierende Gehäuse oder Abdeckungen — ist allgemein nur auf gewisse Ausführungen von Kleinschweißtransformatoren beschränkt. Bei dem ebenfalls gegen zu hohe Berührungsspannung zu schützenden Werkstück ist die Schutzisolierung verfahrensbedingt nicht möglich.

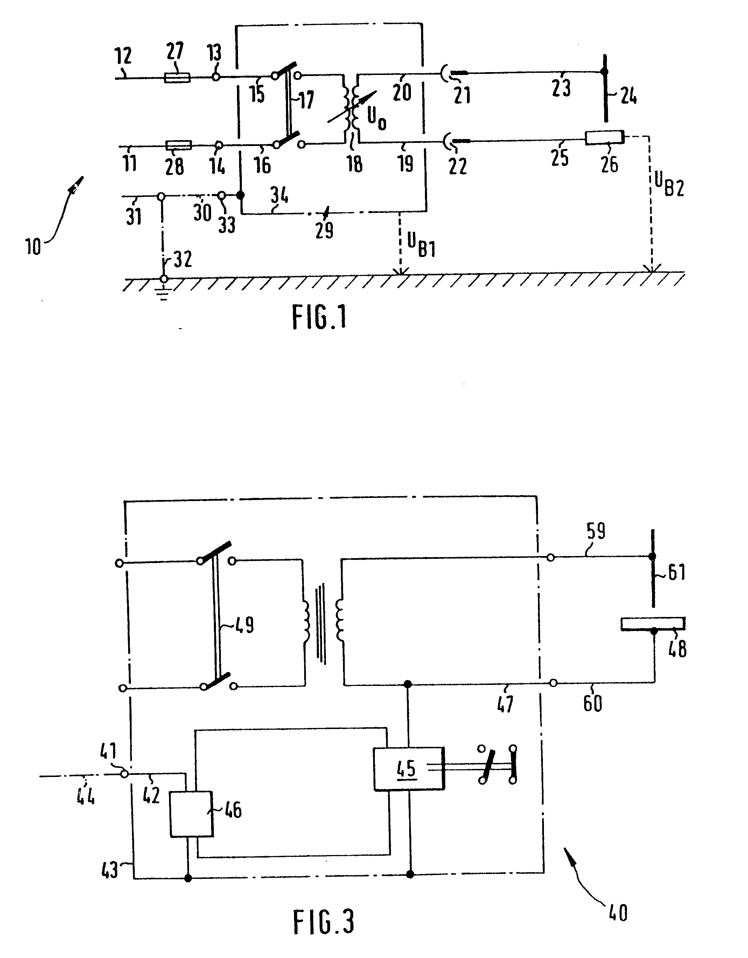

In Fig. 1 ist eine Schweißeinrichtung 10 in einfachster Form mit Schutzmaßnahme Nullung dargestellt von der bei der Anmeldung als Stand der Tecknik ausgegangen wird. Die bekannte Schweißeinrichtung 10 besteht im wesentlichen aus den Außenleitern 11, 12 des speisenden Wechselstromnetzes, die über die Stromquellenanschlüsse 13, 14 mit den Primärleitungen 15, 16 an einen Ein/Aus-Schalter oder Schütz 17 angeschlossen sind, der bei Schaltstellung — Ein — den Schweißstromkreis über den Hauptstromtransformator 18 mit den Sekundärleitungen 19, 20, dem Elektrodenanschluß 21, dem Werkstückanschluß 22, der Elektrodenleitung 23 mit der Elektrode 24 und der Werkstückleitung 25 mit dem Werkstück 26 schließt. In Reihe mit den Außenleitern 11, 12 sind Schmelzsicherungen oder Sicherungsautomaten 27, 28 angeordnet, die den Primärstromkreis der Schweißrichtung 10 gegen Überlastung sichern. Das Stromquellengehäuse 34 der Schweißstromquelle 29 ist durch einen Schutzleiter 30, den Nulleiter 31 und den Schutzleiter 32 mit der Erde verbunden. Der Anschluß 33 des Schutzleiters 30 erfolgt an dem Stromquellengehäuse 34 der Schweißeinrichtung 10. Die Berührungsspannung zwischen Gehäuse und Erde ist mit $U_{B1}$ und die Berührungsspannung zwischen Werkstück und Erde mit $U_{B2}$ bezeichnet.

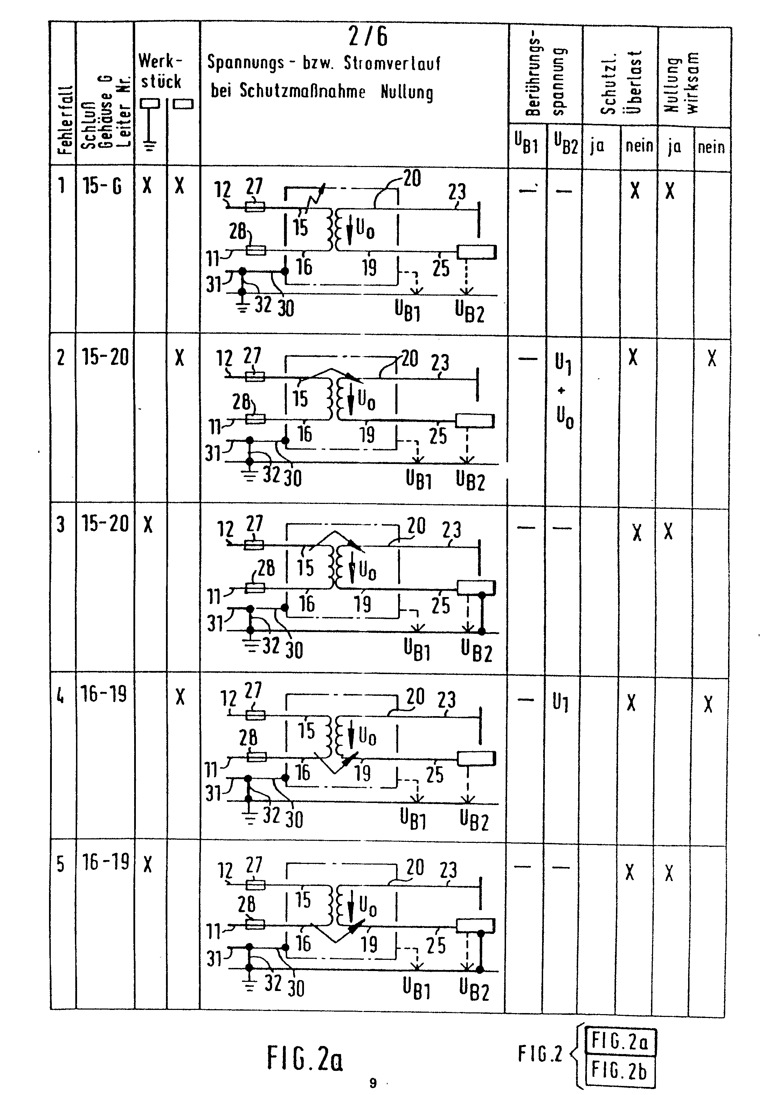

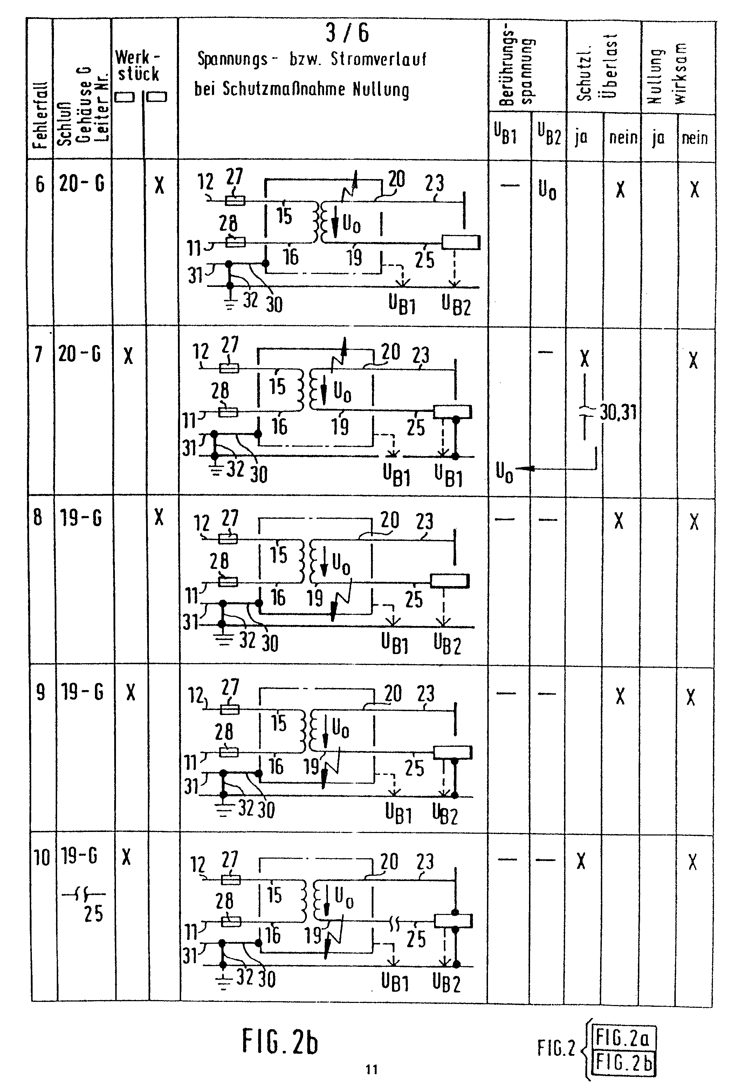

In Fig. 2 sind die in der Stromquelle grundsätzlich möglichen Fehlerfälle erfaßt.

Die in den Fällen 3, 5, 7, 9 und 10 eingezeichnete Verbindung vom Werkstück zur Erde stellt keine absichtlich hergestellte »Erdung« dar, sondern ergibt sich aus Anordnung und Lage des Werkstückes von selbst oder wird durch den Schutzleiter eines das Werkstück tragenden Schweißtisches bzw. einer Vorrichtung oder eines mit dem Werkstück in leitender Verbindung stehenden Elektrowerkzeuges hergestellt.

Das Werkstück kann aber auch ungeerdet, z. B. auf Holzböcken ruhend oder auf einem nicht leitenden Boden befindlich, angeordnet sein.

Es zeigt sich, daß in drei Fällen (Nr. 2, 4, 6) am ungeerdeten Werkstück und in einem Fall (Nr. 7) am Stromquellengehäuse eine gefährliche Berührungsspannung — in den meisten Fällen ist die Leerlaufspannung $U_0$ größer als 65 V — auftritt, ohne daß die Schutzmaßnahme Nullung wirksam wird. Im Fehlerfall Nr. 10 besteht die Gefahr der Überlastung und damit des Durchbrennens des Schutzleiters, ebenfalls ohne Wirksamwerden der Schutzmaßnahme.

Trotz der Erfüllung der Bedingungen der Schutzklasse I wird also die Grundforderung, das Auftreten und Bestehenbleiben einer zu hohen Berührungsspannung im Fehlerfall zu verhindern, nicht erfüllt.

Bei den Fehlerfällen 8, 9 und 10 in Tabelle 1 kann die Verbindung zwischen der Leitung 19, also damit auch des gesamten Leitungszuges zwischen Werkstück und Transformator, und dem Schutzleiter und der Erde außer durch Masseschluß mit gleicher Wirkung auch auf andere Weise erfolgen, z. B. durch folgende Bedienungsfehler (siehe Unfallverhütungsvorschrift 26.0 §30):

a) Die Werkstückleitung ist wohl an ein Werkstück angeschlossen, geschweißt wird aber an einem anderen Werkstück. Beide Werkstücke stehen je mit einem Elektrowerkzeug der Schutzklasse I in leitender Verbindung.

b) Der Werkstückanschluß der Stromquelle ist nicht direkt mit dem Werkstück sondern über einen Heizkörper mit der Erde verbunden, geschweißt wird an einem ungeerdeten Werkstück, das mit einem Elektrowerkzeug der Schutzklasse I in leitender Verbindung steht.

c) Zwischen der Werkstückunterlage (z. B. Schweißtisch, Schiene) an die die Werkstückleitung angeschlossen ist, und dem Werkstück, das mit einem Elektrowerkzeug der Schutzklasse I in leitender Verbindung steht, besteht ein zu hoher Übergangswiderstand.

Im Fehlerfall 10 wurde die Werkstückleitung, z. B. durch Überfahren, unterbrochen oder es wurde vergessen, sie an die Stromquelle oder an das Werkstück anzuschließen.

In den VDE-Bestimmungen 0541 und 0544 Teil 99 wird nur Schutzklasse I gefordert, nicht jedoch, zur Erreichung des Schutzzieles, den Betreiber einer Lichtbogenschweißeinrichtung gegen zu hohe Berührungsspannung zu schützen, auch andere oder zusätzliche Maßnahmen durchzuführen.

Die Unfallverhütungsvorschrift der deutschen Berufsgenossenschaft — UVV 26.0 (VBG 15) »Schweißen, Schneiden und verwandte Arbeitsverfahren« vom 1. 4. 78 — beschreibt wohl (in §30 (5)/Fall 5 und 6) den Fehlerfall 7 in Tabelle 1, stellt aber direkt keine Anforderung auf eine geeignete Schutzmaßnahme, um die geschilderten Vorfälle zu vermeiden.

Aus diesen Gründen werden praktisch ausnahmslos bei allen Einrichtungen zum Lichtbogenschweißen und für verwandte Verfahren keine derartigen Maßnahmen angewendet, so daß in der Praxis eine zu hohe Berührungsspannung auftreten kann, ohne daß eine Schutzmaßnahme wirksam wird.

Die in der Elektrotechnik bekannte Maßnahme, einen Leiter mit Hilfe eines Stromschutzschalters gegen Überlastung zu schützen, kann hier auf den Schutzleiter der Schweißstromquelle angewendet werden. Der Stromschutzschalter schaltet beim Ansprechen das Primärschütz und damit die Schweißstromquelle ab. Der Stromschutzschalter wird wirksam in den Fehlerfällen 7 und 10 der Tabelle 1, in den Fällen 2, 4 und 6 bleibt er jedoch ohne Wirkung und die gefährliche Berührungsspannung bleibt bestehen.'

In der deutschen Patentschrift 1 540 758 wird zum Schutz für die Schweißstromquelle und andere Geräte der Schweißeinrichtung sowie für den Schweißer ein mit der Werkstückleitung des Schweißstromkreises verbundenes Stromrelais vorgeschlagen, das beim Ansprechen die Schweißstromquelle abschaltet. In allen Fehlerfällen, in denen das Werkstück Spannung gegen Erde erhält, also in den Fehlerfällen 2, 4 und 6 der Tabelle 1, spricht das Stromrelais an.

Die vorgeschlagene Lösung weist jedoch folgende Mägel auf:

a) Ein Fehlerstrom, wie in Spalte 1/Zeilen 51—58 der Patentschrift geschildert, kann nicht auftreten, da kein geschlossener Stromkreis vorhanden ist.

b) Bei dem in der Zeichnung der Patentschrift dargestellten und ab Spalte 2/Zeile 46 beschriebenen Ausführungsbeispiel kann vom Pluspol über Relais 15 und Schutzleiter 3 kein Fehlerstrom fließen, da die Werkstückleitung (Spalte 3/Zeilen 9—11) unterbrochen ist und somit kein geschlossener Stromkreis vorhanden ist. Ein Strom über Relais 15 fließt nur dann, wenn das Werkstück mit der Erde in Verbindung steht und die Schweißelektrode direkt oder über einen Lichtbogen mit dem Werkstück leitend verbunden ist. Die dann erfolgende Abschaltung ist aber nicht erforderlich, da ja — wie oben in a) dargestellt, — ohne Relais 15 kein Stromfluß möglich ist.

c) Wenn die Werkstückleitung nicht am Werkstück sondern am Pluspol unterbrochen ist, wird das Relais 15 nicht wirksam.

d) Während bei der Schutzmaßnahme Nullung im Fehlerfall, in dem sie wirksam ist, die Sicherung in der Netzzuleitung infolge des hohen Kurzschlußstromes schnell durchbrennt, müssen hier das Relais 15 und vor allem der Widerstand 16 — 5—10 Ohm — dem hohen Schweißstrom (gemäß Patentschrift bis 7000 A) bis zu seiner Abschaltung zuverlässig gewachsen sein, sie dürfen im Fehlerfall nicht zerstört werden. Schon bei einem Fehlerstrom von 1000 A muß der Widerstand 16 eine Leistung von 5—10 Megawatt bei einer Spannung von 5—10 kV aufnehmen können.

e) In den Fehlerfällen 3, 5, 7, 9 und 10 wird die Reihenschaltung 15—16 durch die Werkstückerdung bzw. durch den Masseschluß (Fall 10) überbrückt und damit unwirksam.
Im Fehlerfall 7 der Fig. 2 wird der Schutzleiter von dem hohen Kurzschlußstrom des Schweißstromkreises durchflossen, er brennt durch und die Schutzmaßnahme Nullung wird unbemerkt aufgehoben. Im Fehlerfall 10 wird der Schutzleiter von dem für ihn viel zu hohen Schweißstrom durchflossen, mit der gleichen Wirkung wie im Fall 7.

Aufgabe der Erfindung ist es eine Schutzschaltung für den Schweißstromkreis von Schweißstromquellen zu schaffen, die die obengenannten Nachteile nicht aufweist und insbesondere die Gefahr des Bestehenbleibens einer zu hoher Berührungsspannung beseitigt.

Die Aufgabe wird dadurch gelöst, daß die Werkstückleitung des Schweißstromkreises über einen Spannungs-Strom-Wächter (U-I-Wächter) mit dem Gehäuse verbunden ist und der U-I-Wächter, der im Störungsfall die Stromquelle abschaltet, mit einem Stromsensor in Wirkverbindung steht, welcher mit dem Schutzleiter und dem Gehäuse verbunden ist.

Die Schutzeinrichtung mit dem U-I-Wächter, der mit einem Stromsensor in Wirkverbindung steht, gewährleistet in allen Fehlerfällen (Tabelle 1) eine sichere Abschaltung der Schweißstromquelle bei zu hoher Berührungsspannung.

Bei einer weiteren Ausgestaltung wird bei Schweißstromquellen mit vertauschbaren Anschlüssen für Werkstück und Schweißbrenner der U-I-Wächter innerhalb der Schweißstromquelle über eine Meßleitung mit der äußeren Werkstückleitung verbunden.

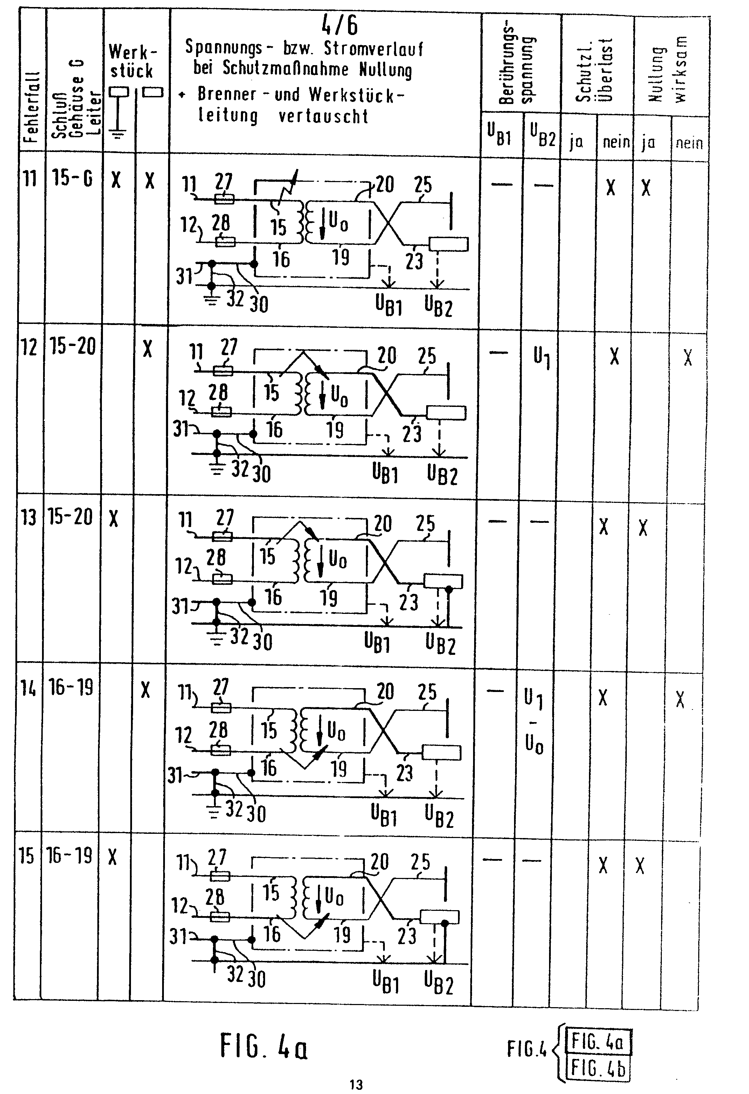

Die Erfindung wird nachstehend anhand von Ausführungsbeispielen, welche in Fig. 3, Fig. 4, Fig. 5 und Fig. 6 veranschaulicht sind, näher beschrieben, wobei auf weitere vorteilhafte Merkmale und Ausgestaltungen hingewiesen wird.

In der Grundschaltung nach der Erfindung in Fig. 3 ist eine Schweißstromquelle in ihrer Gesamtheit mit 40 bezeichnet, wobei ein einfacher Schweißtransformator als Grundschaltung gemäß Fig. 2 dargestellt ist. In gleicher Weise können auch Schweißstromquellen anderer Bauart, z. B. Schweißgleichrichter verschiedener Ausführungen verwendet werden.

Durch den Schutzleiteranschluß 41 mit seiner inneren Verbindungsleitung 42 zum Gehäuse 43 wird die Schutzmaßnahme »Nullung« hergestellt. Der Schutzleiter 44 und die Leitung 42 sind im ungestörten Zustand stromlos.

Der U-I-Wächter 45 mißt den im Störungsfall auftretenden Strom in der Leitung 42 mißt den im Störungsfall auftretenden Strom in der Leitung 42 (über den Strom-Sensor 46) und außerdem die Spannung zwischen der inneren Werkstückleitung 47 und dem über den Schutzleiteranschluß 41 geerdeten Gehäuse 43 und damit auch die Spannung des offen berührbaren Werkstückes 48 gegen Erde, die im allgemeinen Standort des Schweißers ist. Bei Überschreitung von auf dem U-I-Wächter 45 einstellbaren Grenzwerten, z. B. 3 A als Schutzleiterstrom und 10 V zwischen der inneren Werstückleitung 47 und dem Gehäuse 43 wird die Schweißstromquelle 40 abgeschaltet, z. B. durch ein auf dem U-I-Wächter 45 befindliches und auf das Hauptschütz 49 wirkendes Relais oder ähnlich wirkende Abschaltmittel. Die im Fehlerfall auftretende Gefahr des Durchbrennens des Schutzleiters 44 und einer zu hohen Berührungsspannung zwischen Werkstück und Erde wird damit beseitigt.

Zu beachten ist, daß der U-I-Wächter 45 auf alle im Fehlerfall möglichen Strom- und Spannungsformen anspricht, was bezüglich der Spannung mit heute üblichen elektrischen bzw. elektronischen Mitteln leicht möglich ist. Um im Strom-Sensor 46 alle möglichen Stromformen zu erfassen, wird vorteilhafterweise ein Feldplattenwandler verwendet, der bei unverzerrten und verzerrten Wechsel-, Gleich- und Mischströmen auf den U-I-Wächter 45 wirksam wird.

In den genannten Fehlerfällen Nr. 2, 4 und 6 wird im Fehlerfall die am ungeerdeten Werkstück 48 auftretende gefährliche Berührungsspannung von dem U-I-Wächter 45 erfaßt und die Schweißstromquelle 40 wird abgeschaltet. Das in den Fehlerfällen mögliche Durchbrennen des Schutzleiters 44 wird durch die Erfassung des Schutzleiterstromes und die nachfolgende Abschaltung der Schweißstromquelle 40 verhindert.

Die Forderung, die im Falle des Versagens der Betriebsisolierung auftretende zu hohe Berührungsspannung oder das Durchbrennen des Schutzleiters auch in den Fällen zu verhindern, in denen die Schutzmaßnahme Nullung nicht wirksam wird, wird durch die Schaltung nach der Erfindung erfüllt.

Bei Schweißstromquellen für die Schutzgasschweißung unterscheiden sich die Anschlüsse an der Schweißstromquelle für den Schweißbrenner und das Werkstück dadurch, daß der Schweißbrenner außer mit Schweißstrom auch noch mit Schutzgas, Kühlwasser, HF-Zündspannung, Steuerleitungen und bei MIG/MAG mit Schweißdraht versorgt werden muß. Der Brenneranschluß erfolgt an einem speziellen Anschlußklemmbrett oder neuerdings an einem Zentralsteckanschluß, mit dem alles Erforderliche erfaßt wird. Für die Werkstückleitung ist nur eine einfache Schweißkabelsteckvorrichtung erforderlich. Ein Vertauschen von Brenner und Werkstückkabel, derart, daß das Werstückkabel an den für den Brenner vorgesehenen Anschluß angeschlossen wird und umgekehrt, ist also nicht möglich.

Bei Schweißstromquellen für das Verschweißen von Stabelektroden muß dem Elektrodenhalter wie dem Werkstück nur Schweißstrom zugeführt werden, die Steckvorrichtungen für Elektroden- und Werkstückkabel sind gleich. Ein Vertauschen ist also leicht möglich, sei es aus Versehen oder bei Schweißgleichrichtern mit der Absicht, die für die Schweißelektrode erforderliche Polarität zu erhalten.

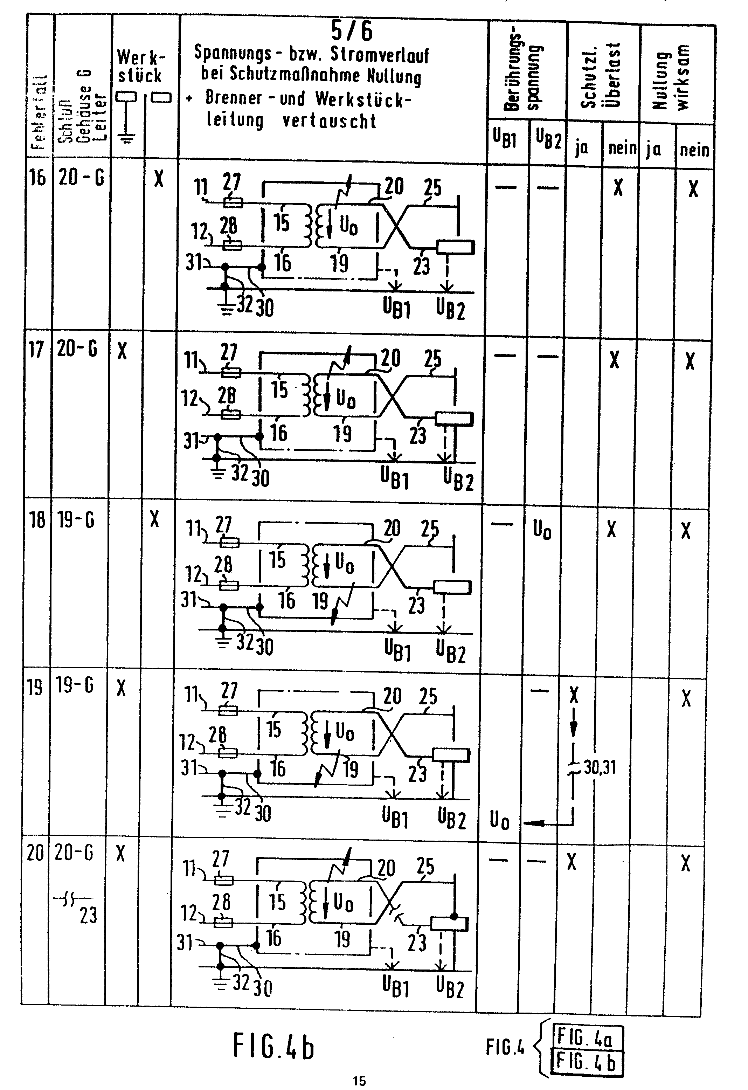

In Fig. 4 sind die verschiedenen Fehlerfälle entsprechend Fig. 2 für den Fall vertauschter Schweißleitungen erfaßt. Es zeigt sich, daß auch hier die Schutzmaßnahme Nullung nicht in allen Fällen wirksam ist. In drei Fällen ergibt sich eine zu hohe Berührungsspannung am Werkstück, in einem Fall am Gehäuse. In zwei Fällen ist der Schutzleiter überlastet und brennt durch.

Bei vertauschten Schweißleitungen treten nun folgende Änderungen in der Wirkung der vorgeschlagenen Schutzeinrichtung ein:

a) Bei geerdetem Werkstück erhält die Leitung 47 und damit der U-I-Wächter 45 auch schon ohne die Fehler 13, 15, 17, 19 und 20 der Fig. 4 die Spannung $U_0$ gegen Erde, er spricht an und schaltet die Schweißstromquelle ab. Ein Schweißbetrieb ist also nicht möglich,

b) Während in den Fällen 12 und 14 der Fig. 4 die Schutzschaltung infolge Anliegens der Netzspannung am U-I-Wächter 45 wirksam ist, ist dieser im Fall 18 nicht wirksam, die Berührungsspannung $U_0$ am Werkstück 48 bleibt bestehen.

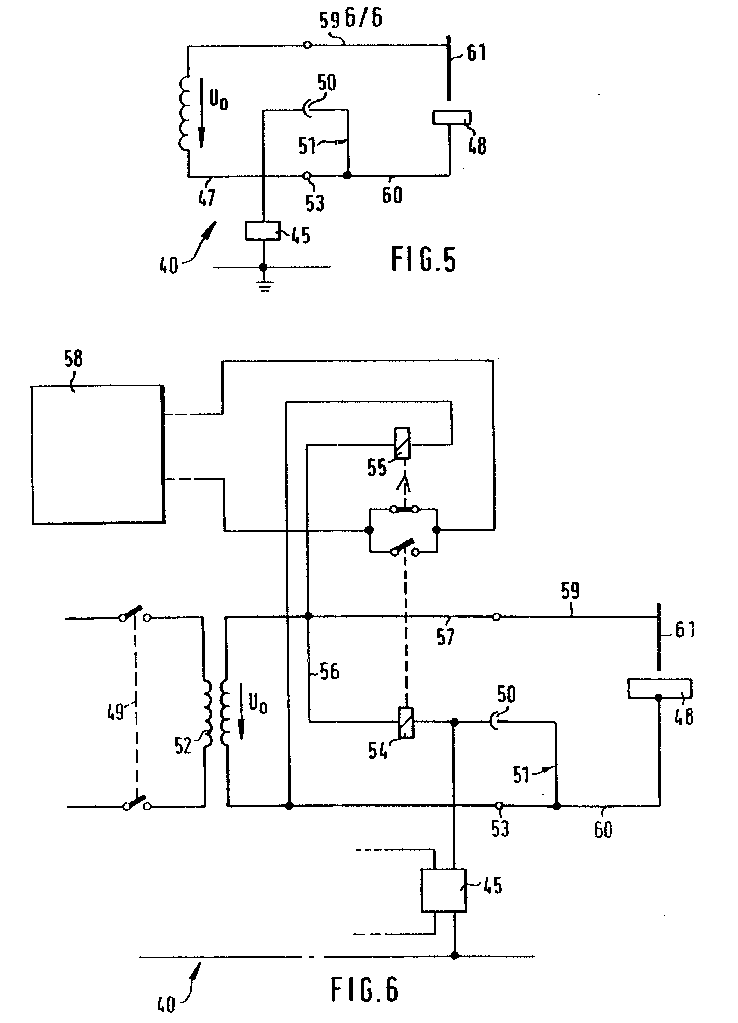

Eine vorteilhafte Ausgestaltung der Grundschaltung nach der Erfindung (Fig. 3) besteht darin, bei Schweißstromquellen mit vertauschbaren Anschlüssen 59, 60 für Werkstück 48 und Schweißbrenner 61 einen zusätzlichen Meß-Sekundäranschluß 50 vorzusehen (Fig. 5), der mit der Meßleitung 51 fest verbunden ist, welche ihrerseits mit der äußeren Werkstückleitung 60 verbunden ist.

Der U-I-Wächter 45 wird dann nicht mehr an die innere Leitung 47 sondern an den Meß-Sekundäranschluß 50 angeschlossen. Da er damit immer mit dem Werkstück 48 verbunden ist, tritt er dann immer in Aktion, wenn das Werkstück 48 Spannung gegen Erde erhält, also jetzt auch im Fehlerfall 18. Bei geerdetem Werkstück 48 kann jetzt der U-I-Wächter 45 keine Spannung mehr erhalten, die Schweißstromquelle 40 wird nicht mehr ohne Grund abgeschaltet.

Zweckmäßigerweise wird der Schweißkabelstecker an der Werkstückleitung 60 so ausgebildet, daß der Schweißstromanschluß und der Meß-Sekundäranschluß 50 gemeinsam in einem Stecker erfolgen.

Mit dieser Schaltung ist auch gewährleistet, daß bei der Gleichstromschweißung die Elektrode 61 wahlweise an Plus oder Minus gelegt werden kann, ohne daß die Schutzschaltung ihre Wirkung verliert.

Um sicherzustellen daß erstens das Werkstück 48 immer an den für das Werkstück 48 vorgesehenen Anschluß 53 angeschlossen ist, was auch aus anderen Gründen, z. B. für das Schweißen mit mehreren Lichtbögen an einem Werkstück 48 von Bedeutung ist, und daß zweitens der Meß-Sekundäranschluß 50 ordnungsgemäß erfolgt ist, wird die Erweiterung der Schaltung nach Fig. 6 vorgeschlagen. Dabei ist die Meßleitung 51 mit der Elektrodenleitung 57 verbunden und enthält ein Relais 54, durch welches eine Primärschützsteuerung 58 der Schweißstromquelle 40 betätigbar ist. Das zusätzliche Relais 54 liegt über Meß-Sekundäranschluß 50 an $U_0$, ein weiteres Relais 55 direkt an der Spannung $U_0$. Die Schweißstromquelle kann über die Steuerschaltung 58 für das Primärschütz 49 in bekannter Weise eingeschaltet werden. Damit erhält Relais 55 die Spannung $U_0$ und öffnet nach kurzer Verzögerung seinen Öffnerkontakt. Das Schütz 49 bleibt nur dann angezogen, wenn Relais 54 angezogen ist, wenn also die Werkstückleitung 60 und der Meß-Sekundäranschluß 50 einwandfrei angeschlossen sind.

Werden Werkstück- und Elektrodenleitung vertauscht, so ergibt sich beim Einschalten das Schütz 49 wohl über den Öffner von Relais 55 anzieht, das Relais 54 erhält jedoch keine Spannung und kann den sich öffnenden Kontakt von Relais 55 nicht überbrücken — die Schweißstromquelle wird abgeschaltet.

Soll die Überwachung des Meß-Sekundäranschlusses 50 auch bei vertauschten Schweißleitungen einen Schweißbetrieb ermöglichen, so ist in der Schaltung nach Fig. 6 das Relais 54 mit der Leitung 56 nicht an die Leitung 57 anzuschließen sondern an eine Mittelanzapfung des Transformators 52, so daß das Relais 54 in beiden Fällen die Spannung $U_0/2$ erhält und anziehen kann.

Die vorgeschlagenen Schaltungen nach Fig. 3, 5 und 6 können auch mit elektronischen Mitteln realisiert werden.

## Patentansprüche

1. Schutzeinrichtung für den Schweißstromkreis von Schweißstromquellen in genullten Anlagen mit einem Gehäuse (43) und einem Schutzleitersystem, dadurch gekennzeichnet, daß die Werkstückleitung (47) des Schweißstromkreises über einen Spannungs-Strom-Wächter (U-I-Wächter) (45) mit dem Gehäuse (43) verbunden ist und der U-I-Wächter (45), der im Störungsfall die Schweißstromquelle abschaltet, mit einem Stromsensor (46) in Wirkverbindung steht, welcher mit dem Schutzleiter (42) und dem Gehäuse (43) verbunden ist.

2. Schutzeinrichtung nach Anspruch 1, dadurch gekennzeichnet, daß bei Schweißstromquellen mit nicht vertauschbaren Anschlüssen (59, 60) für Werkstück (48) und Schweißbrenner (61) der U-I-Wächter (45) innerhalb der Schweißstromquelle (40) mit der Werkstückleitung (47) verbunden ist.

3. Schutzeinrichtung nach Anspruch 1, dadurch gekennzeichnet, daß bei Schweißstromquellen (40) mit vertauschbaren Anschlüssen (59, 60) für Werkstück (48) und Schweißbrenner (61) der U-I-Wächter (45) innerhalb der Schweißstromquelle (40) über eine Meßleitung (51) mit der äußeren Werkstückleitung (60) verbunden ist.

4. Schutzeinrichtung nach Anspruch 3, dadurch gekennzeichnet, daß die Meßleitung (51) mit der Elektrodenleitung (57) verbunden ist und ein Relais (54) enthält, durch welches eine Primärschützsteuerung (58) der Schweißstromquelle (40) betätigbar ist.

## Claims

1. Protective device for the welding circuit of welding power sources in neutralized installations with a housing and a protective wire system characterized by the fact that the workpiece line (47) of the welding circuit is connected via a voltage current controller (U-I controller) (45) with the housing (43) and the U-I controller, which in case of trouble disconnects the welding power source and which is in effective connection with a current measuring device (46) being connected with the protective wire (42) and the housing (43).

2. Protective device according to claim 1, characterized by the fact that in case of welding current sources with not interchangeable connections (59, 60) for workpiece (48) and the welding torch (61) the U-I controller inside the welding power source (40) is connected with the workpiece line (47).

3. Protective device according to claim 1, characterized by the fact that in case of welding power sources (40) with interchangeable connections (59, 60) for the workpiece (48) and the welding torch (61) the U-I controller (45) inside the welding power source (40) is connected with the outer workpiece line (60) via a measuring line (51).

4. Protective device according to claim 3, characterized by the fact that the measuring line (51) is connected with the electrode line (57) and that it contains a relay (54) by which a primary contactor equipment (58) of the welding power source (40) may be actuated.

## Revendications

1. Installation de protection pour le circuit du courant de soudage de sources de courant de soudage dans des installations mises à la masse, comprenant un boîtier (42) et un système à conducteur de protection, caractérisée en ce que: le conducteur (47) relié à la pièce, du circuit du courant de soudage est relié par un contrôleur de tension et d'intensité (contrôleur U/I) (45) au boîtier (43) et le contrôleur I/U (45) qui, en cas d'incident, coupe la source de courant de soudage, coopère avec un capteur d'intensité de courant (46) qui est relié au conducteur de protection (42) et au boîtier (43).

2. Installation de protection selon la revendication 1, caractérisée en ce que dans les sources de courant de soudage en raccord (59, 60) non interchangeable pour la pièce (48) et le pistolet de soudage (61), le contrôleur I/U (45) est relié au conducteur de la pièce (47) dans la source de courant de soudage (40).

3. Installation de protection selon la revendication 1, caractérisée en ce que pour des sources de courant de soudage (40) à raccord non interchangeable (59, 60) pour la pièce (48) et le pistolet de soudage (61), le contrôleur I/U (45) est relié dans la source de courant de soudage (60) au conducteur de pièce (60) extérieur par l'intermédiaire d'un conducteur de mesure (51).

4. Installation de protection selon la revendication 3, caractérisée en ce que le conducteur de mesure (51) est relié au conducteur (57) de l'électrode et comporte un relais (54) qui peut mettre en oeuvre une commande de protection primaire (58) de la source de courant de soudage (40).

FIG.1

FIG.3

| Fehlerfall | Schluß Gehäuse G Leiter Nr. | Werkstück | | 2/6 Spannungs- bzw. Stromverlauf bei Schutzmaßnahme Nullung | Berührungsspannung | | Schutzl. überlast | | Nullung wirksam | |
|---|---|---|---|---|---|---|---|---|---|---|
| | | | | | $U_{B1}$ | $U_{B2}$ | ja | nein | ja | nein |
| 1 | 15–G | X | X | *(Schaltbild: 12 27 28 11 31 32 30 15 16 20 19 23 25 $U_0$ $U_{B1}$ $U_{B2}$)* | — | — | | X | X | |
| 2 | 15–20 | | X | *(Schaltbild: 12 27 28 11 31 32 30 15 16 20 19 23 25 $U_0$ $U_{B1}$ $U_{B2}$)* | — | $U_1 + U_0$ | | X | | X |
| 3 | 15–20 | X | | *(Schaltbild: 12 27 28 11 31 32 30 15 16 20 19 23 25 $U_0$ $U_{B1}$ $U_{B2}$)* | — | — | | X | X | |
| 4 | 16–19 | | X | *(Schaltbild: 12 27 28 11 31 32 30 15 16 20 19 23 25 $U_0$ $U_{B1}$ $U_{B2}$)* | — | $U_1$ | | X | | X |
| 5 | 16–19 | X | | *(Schaltbild: 12 27 28 11 31 32 30 15 16 20 19 23 25 $U_0$ $U_{B1}$ $U_{B2}$)* | — | — | | X | X | |

FIG. 2a

FIG. 2 { FIG. 2a / FIG. 2b }

| Fehlerfall | Schluß Gehäuse G Leiter Nr. | Werk-stück □ □ | 3 / 6 Spannungs- bzw. Stromverlauf bei Schutzmaßnahme Nullung | Berührungs-spannung | | Schutzl. Überlast | | Nullung wirksam | |
|---|---|---|---|---|---|---|---|---|---|
| | | | | $U_{B1}$ | $U_{B2}$ | ja | nein | ja | nein |
| 6 | 20 - G | X | 12 27 20 23 / 15 $U_0$ / 28 / 11 16 19 25 / 31 32 30 $U_{B1}$ $U_{B2}$ | — | $U_0$ | | X | | X |
| 7 | 20 - G | X | 12 27 20 23 / 15 $U_0$ / 28 / 11 16 19 25 / 31 32 30 $U_{B1}$ $U_{B1}$ / $U_0$ 30,31 | — | | X | | | X |
| 8 | 19 - G | X | 12 27 20 23 / 15 $U_0$ / 28 / 11 16 19 25 / 31 32 30 $U_{B1}$ $U_{B2}$ | — | — | | X | | X |
| 9 | 19 - G | X | 12 27 20 23 / 15 $U_0$ / 28 / 11 16 19 25 / 31 32 30 $U_{B1}$ $U_{B2}$ | — | — | | X | | X |
| 10 | 19 - G ⊣ ⊢ 25 | X | 12 27 20 23 / 15 $U_0$ / 28 / 11 16 19 25 / 31 32 30 $U_{B1}$ $U_{B2}$ | — | — | X | | | X |

FIG.2b

11

FIG.2 { FIG.2a / FIG.2b }

| Fehlerfall | Schluß Gehäuse G Leiter | Werk-stück | | 4/6 Spannungs- bzw. Stromverlauf bei Schutzmaßnahme Nullung + Brenner- und Werkstück-leitung vertauscht | Berührungs-spannung | | Schutzl. Überlast | | Nullung wirksam | |
|---|---|---|---|---|---|---|---|---|---|---|
| | | | | | $U_{B1}$ | $U_{B2}$ | ja | nein | ja | nein |
| 11 | 15-G | X | X | 11 27 20 25 / 12 28 15 $U_0$ 16 19 23 / 31 32 30 $U_{B1}$ $U_{B2}$ | — | — | | X | X | |
| 12 | 15-20 | | X | 11 27 20 25 / 12 28 15 $U_0$ 16 19 23 / 31 32 30 $U_{B1}$ $U_{B2}$ | — | $U_1$ | | X | | X |
| 13 | 15-20 | X | | 11 27 20 25 / 12 28 15 $U_0$ 16 19 23 / 31 32 30 $U_{B1}$ $U_{B2}$ | — | — | | X | X | |
| 14 | 16-19 | | X | 11 27 20 25 / 12 28 15 $U_0$ 16 19 23 / 31 32 30 $U_{B1}$ $U_{B2}$ | — | $U_1 - U_0$ | | X | | X |
| 15 | 16-19 | X | | 11 27 20 25 / 12 28 15 $U_0$ 16 19 23 / 31 32 30 $U_{B1}$ $U_{B2}$ | — | — | | X | X | |

FIG. 4a

FIG.4 { FIG. 4a / FIG. 4b }

| Fehlerfall | Schluß Gehäuse G Leiter | Werk-stück | 5/6 Spannungs- bzw. Stromverlauf bei Schutzmaßnahme Nullung + Brenner- und Werkstück-leitung vertauscht | Berührungs-spannung $U_{B1}$ | $U_{B2}$ | Schutzl. Überlast ja | nein | Nullung wirksam ja | nein |
|---|---|---|---|---|---|---|---|---|---|
| 16 | 20 - G | X | | — | — | | X | | X |
| 17 | 20 - G | X | | — | — | | X | | X |
| 18 | 19 - G | X | | — | $U_0$ | | X | | X |
| 19 | 19 - G | X | | — | $U_0$ | X | | | X |
| 20 | 20 - G | X | | — | — | X | | | X |

FIG.4b

FIG.4 { FIG.4a / FIG.4b }

FIG.5

FIG.6